## Europäisches Patentamt
## European Patent Office
## Office européen des brevets

(11) Veröffentlichungsnummer: **0 258 921**
**A1**

(12) # EUROPÄISCHE PATENTANMELDUNG

(21) Anmeldenummer: 87201498.0

(22) Anmeldetag: 06.08.87

(51) Int. Cl.⁴: **C09C 1/36** , C09C 3/06 , C09C 3/08 , C09C 3/12

(30) Priorität: 23.08.86 DE 3628661

(43) Veröffentlichungstag der Anmeldung: 09.03.88 Patentblatt 88/10

(84) Benannte Vertragsstaaten: BE DE ES FR GB IT NL

(71) Anmelder: METALLGESELLSCHAFT AG
Reuterweg 14 Postfach 3724
D-6000 Frankfurt/M.1(DE)

(72) Erfinder: Kreth, Wolfgang, Dr.
Wilhelmallee 47
D-4100 Duisburg 17(DE)
Erfinder: Griebler, Wolf-Dieter, Dr.
Crusestrasse 2
D-4130 Moers 1(DE)

(74) Vertreter: Rieger, Harald, Dr.
Reuterweg 14
D-6000 Frankfurt a.M.(DE)

(54) Verfahren zur Herstellung von TiO2- Kompositionspigmenten.

(57) In einem Verfahren zur Herstellung eines $TiO_2$-Kompositionspigmentes, das einen weißen inerten Extender enthält, wird zwecks Vereinfachung des Neutralisationsprozesses und zur Erübrigung von Auswaschvorgängen eine freie und gebundene Schwefelsäure enthaltende und von farbgebenden Elementen gereinigte Metatitansäure-Suspension durch Zusatz von (auf Gesamtsulfat bezogen) stöchiometrischen Mengen Calcium- und/oder Barium-Oxid, -Hydroxid oder -Carbonat neutralisiert und das Calcium-und/oder Bariumsulfat in inniger Mischung mit der Metatitansäure ausgefällt und der Niederschlag abgetrennt und getrocknet wird.

Das ausgefällte Calcium-und/oder Bariumsulfat ist in einer Menge von I bis 25 Gew.-% in dem (Copräzipitat) enthalten.

EP 0 258 921 A1

## Verfahren zur Herstellung von TiO₂-Kompositionspigmenten

Die Erfindung betrifft ein Verfahren zur Herstellung eines TiO₂-Kompositionspigmentes, das einen weißen inerten Extender enthält.

Es ist bekannt, Mischpigmente des Titandioxids durch mechanisches Mischen von Titandioxidpigmenten mit z.B. Zinkoxid, Calciumsulfat oder Bariumsulfat herzustellen. Es sind auch Verfahren zur Herstellung von Titankompositionspigmenten bekannt, bei denen Titanoxidhydrat aus mineralsauren Titanlösungen in Gegenwart eines weißen Trägermaterials, wie Bariumsulfat, durch Erhitzen und Hydrolyse ausgefällt wird. Der Niederschlag wird von der Mutterlauge getrennt, gewaschen und calciniert (DE-PS 570 875).

Es ist bekannt, Titandioxid, das als Weißpigment in der Anatas-und Rutil-Modifikation eine weite industrielle Anwendung findet, nach dem Sulfat-oder Chlorverfahren herzustellen. Gemäß dem Sulfatverfahren wird nach einem schwefelsauren Aufschluß von Ilmenit oder titanhaltigen Schlacken die erhaltene Titanylsulfatlösung einem Hydrolyseschritt zur Ausfällung von Metatitansäure unterworfen. Anschließend wird in einem schwefelsauren Medium so lange gewaschen, bis die das optische Verhalten beeinträchtigenden Schwermetallionen, wie Eisen, Chrom, Vanadium, Kupfer, weitgehend aus der Suspension entfernt sind. Die erhaltene Metatitansäure-Suspension enthält verfahrensbedingt in der Regel zwischen 5 und 10 % freie und gebundene Schwefelsäure. In einem nachfolgenden Calcinationsschritt, der zur Erzielung der für die Pigmenteigenschaften notwendigen Korngröße erforderlich ist, wird die Schwefelsäure in Form von SO₃ abgespalten. Diese SO₃-Abspaltung während des Calcinationsschrittes macht eine aufwendige Abgasreinigung notwendig. Benötigt man ein Titandioxid, das nicht calciniert worden ist, d.h. also ein oberflächenreiches Produkt, so muß die anhaftende Schwefelsäure zunächst über einen Neutralisationsschritt mit z.B. Natronlauge oder Ammoniak neutralisiert werden. Wesentlicher Nachteil eines solchen Verfahrens ist die anschließend notwendige Auswaschung der bei der Neutralisation entstandenen löslichen Salze. Das Auswaschen dieser Salze wird durch die sehr schlechte Filtrierbarkeit der neutralisierten Metatitansäure-Suspension sehr erschwert.

Der Erfindung liegt die Aufgabe zugrunde, die Nachteile bekannter und insbesondere des vorgenannten Verfahrens zu vermeiden und ein TiO₂-Kompositionspigment in einfacher und wirtschaftlicher Weise herzustellen.

Die Erfindung löst die Aufgabe mit einem Verfahren zur Herstellung eines TiO₂-Kompositionspigmentes, das einen weißen inerten Extender enthält. Das Verfahren gemäß der Erfindung besteht darin, daß eine freie und gebundene, Schwefelsäure enthaltende und von farbgebenden Elementen gereinigte Metatitansäure-Suspension durch Zusatz von - auf Gesamtsulfat bezogen - stöchiometrischen Mengen Calcium-und/oder Barium-Oxid, -Hydroxid oder -Carbonat neutralisiert und das Calcium-und/oder Bariumsulfat in inniger Mischung mit der Metatitansäure ausgefällt und der Niederschlag abgetrennt und getrocknet wird.

Gemäß dem Verfahren der Erfindung wird die in der Metatitansäure-Suspension noch enthaltene Schwefelsäure mit Barium-bzw. Calcium-Ionen gebunden. Das dabei entstehende Barium-oder Calciumsulfat fällt als schwerlöslicher weißer Niederschlag aus und mischt sich innig mit der Metatitansäure. Da sowohl Barium-als auch Calciumsulfat für viele Anwendungen einen ausgesprochen inerten Charakter aufweisen, stören sie als Begleitkomponente nicht, vielmehr wird ein vorteilhaftes TiO₂-Kompositionspigment bereitgestellt. Bei genauer Einhaltung der Stöchiometrie der Neutralisationskomponenten wird gemäß dem Verfahren der Erfindung eine Suspension hergestellt, die praktisch frei von gelösten Salzen ist. Das hat den großen Vorteil, daß diese Suspension ohne einen zusätzlichen Filtrations-und Waschprozeß direkt getrocknet werden kann. Das Fertigprodukt ist damit unmittelbar zugänglich und die sonst bei einem Waschprozeß auftretenden Filtrationsprobleme werden vermieden.

In dem Verfahren der Erfindung werden die Neutralisationskomponenten bzw. das Calcium-und/oder Barium-Oxid, -Hydroxid oder -Carbonat in fester feinteiliger Form oder vorzugsweise in Form einer Suspension eingesetzt. Zweckmäßig wird eine derartige Suspension unter Rühren langsam in die - schwefelsaure Metatitansäure-Suspension eingetragen. Bei einem pH-Wert von 6,5 bis 7,0 wird die Zugabe beendet. In der Mischung des Fällproduktes ist das Calcium-und/oder Bariumsulfat in einer Menge von 1 bis 25 und vorzugsweise in einer Menge von 5 bis 15 Gew.-% enthalten. Dieser Anteil ist abhängig von dem verfahrensbedingten Gehalt der Metatitansäure-Suspension an freier und gebundener Schwefelsäure, der üblicherweise zwischen 5 und 10 % liegt.

Für eine Reihe von Anwendungen muß das Fällungsprodukt bzw. das TiO₂-Kompositionspigment bestimmte Primärkorngrößen bzw. bestimmte spezifische Oberflächen aufweisen. Um dies zu erzielen, wird nach einer Ausführungsform der Erfindung die praktisch salzfreie neutrale Suspension des Copräzipitats unter hydrothermalen Bedingungen behandelt. Hierzu wird die erhaltene Fällungssuspension direkt und als solche in einen Autoclaven eingebracht und bei Temperaturen zwischen 100 und 500°C während 30 bis 120

2

min unter fortwährendem Rühren behandelt. Diese Behandlung kann ansatzweise oder in einem kontinuierlich betriebenen Autoclaven erfolgen. Aus der Tabelle I kann die Abhängigkeit der spezifischen Oberfläche der Kompositionsprodukte von der Temperatur des Hydrothermalprozesses nach einstündiger Behandlung entnommen werden.

T a b e l l e     1

| Temperatur °C | Spezif. Oberfläche $m^2/g$ |
|---|---|
| 150 | 155 |
| 200 | 95 |
| 215 | 85 |
| 250 | 55 |
| 275 | 48 |
| 310 | 43 |

Die hydrothermale Behandlung ermöglicht es, im Endprodukt eine spezifische Oberfläche von 30 bis 250 m²/g einzustellen und eine Korngröße von 0,007 bis 0,35 micron zu erzielen.

Nach einer weiteren Ausführungsform der Erfindung kann die gewünschte Primärkorngröße bzw. die gewünschte spezifische Oberfläche auch durch einen Temperprozeß bewirkt werden. Hierzu wird das aus der Suspension abgetrennte und getrocknete Copräzipitat bei einer Temperatur von 100 bis 900°C unter Bewegung des Gutes behandelt. Die Behandlung kann in einem diskontinuierlich betriebenen und indirekt beheizten Chargenofen oder auch in einem indirekt oder direkt beheizten kontinuierlich betriebenen Drehrohrofen vorgenommen werden. In allen Fällen lassen sich bestimmte Primärkorngrößen im Bereich von 0,007 bis 0,35 micron bzw. spezifische Oberflächen im getemperten Produkt von I0 bis 250 m²/g einstellen. Bei diesem Prozeß tritt eine $SO_3$-Abspaltung nicht auf.

Zwecks Oberflächenmodifizierung des $TiO_2$-Kompositionspigments kann das thermisch behandelte Produkt erneut in wäßrigem Medium suspendiert und in an sich bekannter Weise mit einem Oxidhydrat oder einem Oxidhydratgemisch von Silicium, Aluminium oder Zirconium in einer Menge von 0,5 bis I0 % (bezogen auf den $TiO_2$-Gehalt) überzogen werden. Zur Herstellung derartiger Überzüge wird die Suspension des thermisch behandelten Produkts mit in Wasser löslichen Salzen des Siliciums, Aluminiums oder Zirconiums, insbesondere mit Natriumsilicat ($Na_2SiO_3$), Natriumaluminat ($NaAlO_2$), Aluminiumsulfat ($Al_2(SO_4)_3$) oder Zirconylsulfat ($ZrOSO_4$), versetzt und durch Einstellen des pH-Wertes der Suspension auf 3 bis 9 werden die entsprechenden Oxidhydrate auf dem $TiO_2$-Kompositionspigment ausgefällt. Das abgetrennte und ausgewaschene Produkt wird getrocknet.

Für spezielle Anwendungen, insbesondere im Bereich von Lacken, Farben und Kosmetika, kann es wünschenswert sein, die gemäß dem Verfahren der Erfindung erhaltenen Kompositionsprodukte zur Verbesserung ihrer Dispergiereigenschaften mit organischen Verbindungen einer Nachbehandlung zu unterziehen. Je nach Anwendungsfall sind Nachbehandlungen mit längerkettigen Fettsäuren oder deren Salze, wie Stearinsäure, Stearate, oder mit α-ω-Trimethoxypolysiloxanen der Viskosität 300 bis I0 000 cps vorteilhaft. Diese Nachbehandlungskomponenten werden vorzugsweise in Mengen zwischen 0,5 und 20 Gew.-%, bezogen auf den Feststoffgehalt, eingesetzt. Ihre Applikation kann in einem Friktionsmischer unter Ausnutzung der Friktionswärme erfolgen oder sie können vor einer Luft-oder Dampfstrahlmahlung den Produkten zugemischt werden.

Nach dem Verfahren der Erfindung werden Titandioxid-Kompositionsprodukte hergestellt, die aufgrund ihrer Korngröße im Bereich des sichtbaren Lichtes keine optische Aktivität zeigen, d.h. sie sind optisch transparent. Im Bereich des UV-Lichtes (Wellenlänge < 400 nm) wirken sie dagegen als UV-Absorber. Andererseits läßt sich gemäß der Erfindung mittels der Hydrothermal-bzw. Temperbehandlung eine Primärkorngröße einstellen, die auch im Bereich des sichtbaren Lichtes zur Streuung führt. Mit auf diese Art

3

hergestellten Produkten lassen sich Opazität und UV-Absorptivität verbinden. Aufgrund der nach dem erfindungsgemäßen Verfahren einstellbaren Produktoberflächen kann auch die Reaktivität der Kompositionsprodukte gesteuert werden. Kompositionsprodukte, die nach dem Verfahren der Erfindung hergestellt werden, besitzen eine große Anwendungsbreite. Sie können beispielsweise als Rohstoffe in der Katalysatorfertigung, in der Kosmetik, in der Keramik und als Vorstoffe zur Titanatherstellung eingesetzt werden..

Die Erfindung wird anhand der nachstehenden Beispiele näher und beispielhaft erläutert.

Beispiel 1

Eine Metatitansäure-Suspension wird nach dem Sulfatverfahren in folgender Weise gewonnen:

Ilmenit oder titanreiche Schlacken werden durch konzentrierte Schwefelsäure aufgeschlossen, die gebildeten Sulfate werden gelöst und geklärt, die Eisensalze zu leicht hydrolysierbarem Ferrosulfat reduziert und als solches durch Kristallisation und Filtration abgetrennt. Im Filtrat wird durch Einleiten von Dampf die Hydrolyse von $TiO_2$ hervorgerufen. Die erhaltene Metatitansäure-Suspension mit 300 g $TiO_2$/l und ca. 6 % freier und gebundener Schwefelsäure. wird bei 60°C unter mäßigem Rühren mit einer Bariumhydroxid-Suspension, die (100 g/l Bariumhydroxid) enthält, umgesetzt, bis der pH-Wert zwischen 6,5 und 7 liegt. Die Zugabe der benötigten Bariumhydroxid-Suspension erfolgt langsam während 2 Stunden. Nach beendeter Zugabe wird die Suspension noch während weiterer 2 Stunden gerührt, anschließend der Feststoff abgetrennt und bei 105°C im Trockenschrank getrocknet. Das Kompositionsprodukt ist rein weiß und hat eine spezifische Oberfläche von 220 m²/g.

Beispiel 2

Eine nach dem in Beispiel 1 beschriebenen Sulfatverfahren erhaltene Metatitansäure-Suspension mit 300 g $TiO_2$/l und einem Gehalt von gebundener und freier Schwefelsäure von 6 % wird mit festem Bariumcarbonat bei 60°C unter starkem Rühren kontinuierlich in einer Menge versetzt, bis der pH-Wert zwischen 6,5 und 7 liegt. Die neutralisierte Suspension wird nach beendeter Zugabe von Bariumcarbonat noch weitere 2 h gerührt, anschließend die Suspension filtriert und der Feststoff im Trockenschrank bei 105°C getrocknet. Das entstandene Produkt ist rein weiß, seine spez. Oberfläche beträgt 230 m²/g.

Beispiel 3

Eine gemäß Beispiel 1 hergestellte neutralisierte Suspension wird mit einem pH-Wert von 7 und einer Feststoffkonzentration von 200 g/l in einem emaillierten Laboratoriumsautoklaven 1 h auf 200°C erhitzt. Anschließend wird die Suspension filtriert und der Filterkuchen im Trockenschrank getrocknet. Das Produkt ist rein weiß, die spez. Oberfläche beträgt 90 m²/g.

Beispiel 4

Ein nach Beispiel 1 hergestelltes Produkt wird 4 h bei 500°C getempert. Dabei wird keine Gasentwicklung beobachtet. Das entstandene Produkt ist rein weiß und hat eine spez. Oberfläche von 110 m²/g.

Beispiel 5

In einen Friktionsmischer, der mit einer Drehzahlanzeige und mit einer Temperaturanzeige ausgerüstet ist, wird ein nach Beispiel 4 hergestelltes Produkt eingegeben und 5 Gew.-% Stearinsäure hinzugefügt. Die Mischung wird dann bei einer Drehzahl der Mischwerkzeuge von 3000 UpM vorgenommen und so lange durchgeführt, bis die Guttemperatur 75°C erreicht hat. Anschließend wird das Produkt in einem Kühlmischer abgekühlt. Das entstandene Produkt ist weiß, die Stearinsäure hat weitgehend mit der $TiO_2$-Oberfläche reagiert und ist thermoanalytisch nicht mehr als isolierte Verbindung nachweisbar.

**Ansprüche**

1. Verfahren zur Herstellung eines TiO₂-Kompositionspigmentes, das einen weißen inerten Extender enthält, dadurch gekennzeichnet,

daß eine freie und gebundene Schwefelsäure enthaltende und von farbgebenden Elementen gereinigte Metatitansäure-Suspension durch Zusatz von - auf Gesamtsulfat bezogen - stöchiometrischen Mengen Calcium-und/oder Barium-Oxid, -Hydroxid oder -Carbonat neutralisiert und das Calcium-und/oder Bariumsulfat in inniger Mischung mit der Metatitansäure ausgefällt und der Niederschlag abgetrennt und getrocknet wird.

2. Verfahren nach Anspruch 1, dadurch gekennzeichnet, daß das ausgefällte Calcium-und/oder Bariumsulfat in einer Menge von 1 bis 25, vorzugsweise 5 bis 15 Gew.-% in der Mischung (Copräzipitat) enthalten ist.

3. Verfahren nach den Ansprüchen 1 bis 2, dadurch gekennzeichnet, daß vor Abtrennung des Niederschlages die Suspension unter hydrothermalen Bedingungen behandelt und eine spezifische Oberfläche von 30 bis 250 m²/g im Kompositionsprodukt eingestellt wird.

4. Verfahren nach den Ansprüchen 1 bis 2, dadurch gekennzeichnet, daß der abgetrennte und getrocknete Niederschlag bei einer Temperatur von 100 bis 900°C getempert und eine spezifische Oberfläche von 10 bis 250 m²/g im Kompositionsprodukt eingestellt wird.

5. Verfahren nach den Ansprüchen 1 bis 4, dadurch gekennzeichnet, daß das thermisch behandelte und trockene Kompositionsprodukt in wäßriger Suspension mit einem Oxidhydrat oder einem Oxidhydratgemisch von Silicium, Aluminium oder Zirconium in einer Menge von 0,5 bis 10 % (bezogen auf den TiO₂-Gehalt) überzogen wird.

6. Verfahren nach den Ansprüchen 1 bis 5, dadurch gekennzeichnet, daß die getrockneten Kompositionsprodukte mit einer höheren Fettsäure oder deren Metallsalz oder mit einem Organopolysiloxan in einer Menge von 0,5 bis 20 Gew.-% nachbehandelt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A- 278 791 (C.A. KLEIN)<br><br>--- | | C 09 C 1/36<br>C 09 C 3/06<br>C 09 C 3/08<br>C 09 C 3/12 |
| X | GB-A- 116 266 (TITAN CO. A/S)<br>* Seite 1, Zeilen 33-37; Seite 2, Zeilen 33-36; Seite 2, Zeile 48 - Seite 3, Zeile 2 *<br><br>--- | 1,4 | |
| X | US-A-2 444 237 (L. AAGAARD et al.)<br>* Spalte 1, Beispiel 1; Spalte 4, Anspruch 1 *<br><br>--- | 1,4 | |
| A | GB-A- 346 801 (TITAN CO. A/S)<br>* Seite 1, Zeile 99 - Seite 2, Zeile 4 *<br><br>--- | 1 | |
| A | US-A-2 068 066 (W.J. O'BRIEN)<br><br>--- | | RECHERCHIERTE SACHGEBIETE (Int. Cl.4) |
| A | US-A-3 948 676 (S. LAÜFER)<br><br>--- | | C 09 C |
| A | FR-A-2 145 595 (LAPORTE INDUSTRIES)<br><br>----- | | |

Der vorliegende Recherchenbericht wurde für alle Patentansprüche erstellt.

| Recherchenort | Abschlußdatum der Recherche | Prüfer |
|---|---|---|
| DEN HAAG | 19-10-1987 | VAN BELLINGEN I.C.A. |